# EUROPEAN PATENT SPECIFICATION

(11) **EP 3 149 423 B1**
(45) Date of publication and mention of the grant of the patent: **22.06.2022**
(21) Application number: 15726105.8
(22) Date of filing: 27.05.2015
(51) Int. Cl.: F28D 9/00, F28F 3/04

(54) **HEAT EXCHANGER**
WÄRMETAUSCHER
ÉCHANGEUR THERMIQUE

(30) Priority: 27.05.2014 SE 1450634
(43) Date of publication of application: 05.04.2017
(73) Proprietor: SWEP International AB, 261 22 Landskrona (SE)
(72) Inventor: ANDERSSON, Sven, S-281 37 Hässleholm (SE); DAHLBERG, Tomas, S-254 50 Helsingborg (SE)
(74) Representative: Ström & Gulliksson AB
(86) International application number: PCT/EP2015/061753
(87) International publication number: WO 2015/181255

(56) References cited:
- EP-A2- 2 267 391
- WO-A1-2011/162659
- US-A1- 2007 261 834

## Description

### FIELD OF THE INVENTION

The present invention relates to a plate heat exchanger comprising a stack of heat exchanger plates provided with a pressed pattern of ridges and grooves adapted to keep the plates in the stack at a distance from one another by providing contact points between ridges of one heat exchanger plate and grooves of a neighbouring plate and vice versa, such that interplate flow channels are formed between all neighbouring heat exchanger plates in the stack, wherein four port openings are arranged to provide for selective communication to the interplate flow channels, the port openings being arranged in pairs communicating with the same interplate flow channels, wherein one of the port opening pairs communicates with at least two more interplate flow channels than the other pair.

### PRIOR ART

In the art of heat exchange, plate heat exchangers have gained a considerable market share during the latest decades or so, since plate heat exchangers offer cost effectiveness and an efficient means for exchanging heat between fluids.

A typical plate heat exchanger comprises a number of heat exchanger plates provided with a pressed pattern of ridges and grooves placed in a stack such that interplate flow channels are provided between the heat exchanger plates. Selective communication between port openings and the interplate flow channels may be provided by either providing gaskets in grooves surrounding the port openings or, in the case of brazed heat exchangers, providing the areas surrounding the port openings such that such areas of neighbouring plates either contact one another or do not contact one another - if the areas surrounding the port opening contact one another, there will be no communication between the port opening and the interplate flow channel, whereas if they do not contact one another, there will be communication between the port opening and the interplate flow channel.

In some cases, all heat exchanger plates in a brazed heat exchanger are identical to one another, and the areas surrounding two of the port openings are provided on a high level and the areas surrounding the other two port openings are provided on a low level. When put in a stack to from a heat exchanger, every other plate is turned 180 degrees in its plane, such that a port opening being surrounded by an area at a low level will neighbour port openings provided at a high level. Hence, the port opening will communicate with the plate interspace provided between the two upper plates, while it will not communicate with the plate interspace between the two lower plates.

All heat exchangers designed with identical plates are symmetric, i.e. the plate interspaces between all plate pairs are identical.

However, in most cases, asymmetric heat exchangers are preferred (the only case where a symmetric heat exchanger is the optimal choice is a case wherein two equal flows of equal fluids are supposed to exchange heat with one another). Asymmetric heat exchangers have hitherto not been manufactured from identical heat exchanger plates.

In order to manufacture an asymmetric heat exchanger, i.e. a heat exchanger having different flow areas for the fluids to exchange heat, many different approaches have been used, all of them concerning manipulation of the pressed pattern of ridges and grooves keeping the plates at a distance from one another. For example, every other ridge may have lower height than its neighbouring ridges, or the ridges between the contact points may have a lower height. In any event, the plates must have different designs.

Examples of prior art can be found in US 2007/261834A1 disclosing a plate heat exchanger according to the preamble of claim 1 , EP 2267391A2 and WO 2011/162659A1. In US 2007/261834A1, an asymmetric plate heat exchanger comprising a stack of heat exchanger plates provided with a herringbone pattern according to the above is disclosed. However, the areas surrounding the port openings are all at the same height, and selective flow is achieved by providing sealing rings between some of the plates in the area surrounding the port openings. This gives good opportunities to provide different degrees of asymmetry, but the sealing rings may be awkward to handle during manufacturing, and they also constitute a thermal ballast, which may lead to bad brazing characteristics and/or require longer brazing times.

The object of the invention is to provide for a heat exchanger having a large degree of asymmetry while using fewer sealing rings than the heat exchanger of US 2007/261834A1.

### SUMMARY OF THE INVENTION

According to the present invention, these and other objects are achieved by plate heat exchangers of the type mentioned above, wherein selective communication between the port openings at least partly is achieved by providing areas surrounding the port openings of each heat exchanger plate on different levels, such that the areas of neighbouring plates either contact one another or do not contact one another.

Preferably, the heat exchanger plates comprised in the heat exchanger are brazed to one another to form the heat exchanger.

In order to seal the interplate flow channels, the heat exchanger plates may each be provided with a skirt extending in the periphery of the heat exchanger plate, wherein skirts of neighbouring plates are contacting one another when the heat exchanger plates are placed in the stack to form the heat exchanger.

According to one embodiment of the invention, selective communication between some of the port openings and the interplate flow channels is achieved by providing sealing rings between the areas surrounding the port openings on neighbouring plates.

In another embodiment of the invention, the selective communication is achieved by at least some of the port openings of at least some heat exchanger plates being large enough to allow contact between areas surrounding the port openings of heat exchanger plates being provided on either sides of the heat exchanger plate provided with the large enough port opening.

### BRIEF DESCRIPTION OF THE DRAWINGS

Hereinafter, the invention will be described with reference to the appended drawings, wherein:
Figs. 1a, 1b and 1c are an exploded view, a section view and a plan view respectively, of a plate heat exchanger according to a first embodiment of the present invention;
Figs. 2a, 2b and 2c are an exploded view, a section view and a plan view respectively, of a plate heat exchanger according to a second embodiment of the present invention;
Figs. 3a, 3b and 3c are an exploded view, a section view and a plan view respectively, of a plate heat exchanger according to a third embodiment of the present invention;
Figs. 4a, 4b and 4c are an exploded view, a section view and a plan view, respectively, of a plate heat exchanger according to a fourth embodiment which fourth embodiment does not form part of the invention as claimed;
Figs. 5a, 5b and 5c are an exploded view, a section view and a plan view, respectively, of a plate heat exchanger according to a fifth embodiment of the present invention; and
Figs. 6a, 6b and 6c are an exploded view, a section view and a plan view, respectively, of a heat exchanger according to a sixth embodiment of the present invention.

### DESCRIPTION OF EMBODIMENTS

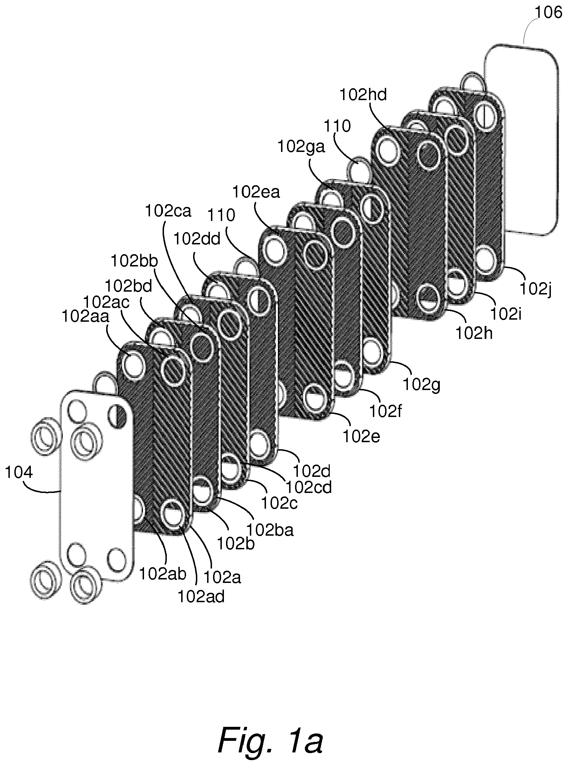

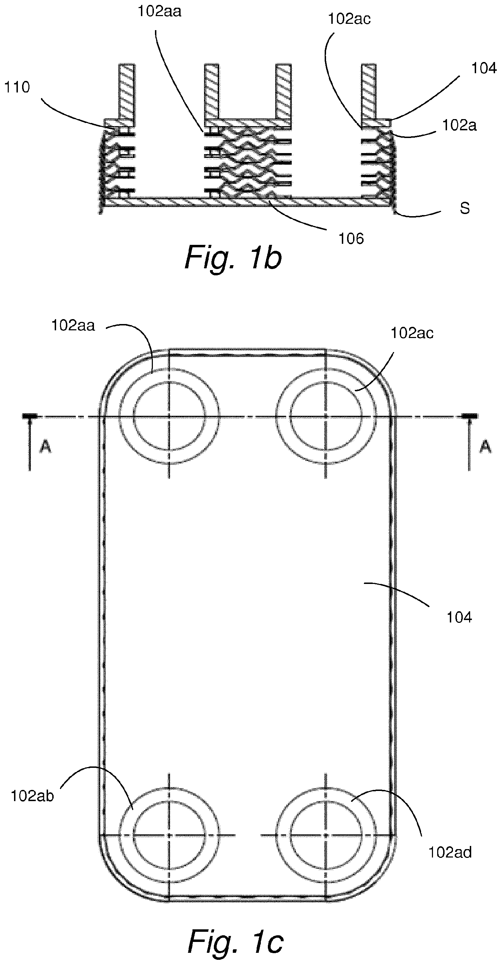

With reference to Figs. 1a, 1b and 1c, a heat exchanger 100 according to a first embodiment of the invention comprises a number of heat exchanger plates 102a-102j, each being provided with a pressed pattern of ridges R and grooves G and being placed in a stack to form the heat exchanger. A skirt S surrounds each plate, the skirt S being adapted to contact skirts of neighbouring plates and form a seal for a plate interspace formed by the plates, the formation of the plate interspace being elaborated on further below. The ridges R and grooves G are preferably arranged in a herringbone pattern, such that contact points between crossing ridges and grooves of neighbouring plates are formed when the plates are put in a stack wherein every other plate is turned 180 degrees in its plane with respect to its neighbouring plates.

Moreover, the heat exchanger plates are provided with port openings 102aa-102ad, 102ba-102bd...102ja-102jd, wherein the areas surrounding the port openings 102aa, 102ab. 102ba, 102bb, 102ca, 102cb, 102da, 102db, 102ha, 102hb, 102ia, 102ib, 102ja, 102jb, 102dc, 102dd, 102ec, 102ed, 102fc and 102fd are provided on a high level and wherein the remaining port openings are provided on a low level. When the heat exchanger plates are stacked in a stack, every other plate is turned 180 degrees in the plane as compared to its neighbouring plates. As a result of this, there will be a selective communication between the ports and the interplate flow channels - however, due to the arrangement of high and low ports, some of the interplate flow channels will communicate with all four port openings. This would lead to mixing of the fluids to exchange heat, which of course is highly unsuitable. To avoid this, sealing rings 110 are placed between the areas surrounding the port openings 102da and 102ed, 102db and 102ec, 102ga and 102hd and 102gb and 102gc.

This leads to a heat exchanger wherein the port opening 102aa and its corresponding port openings of the other plates will communicate with the port opening 102ab and its corresponding port openings of the other plates via the interplate flow channels between heat exchanger plates 102b and 102c, 102e and 102f and 102h and 102i. The port opening 102ac and its corresponding port opening of the other plates will communicate with the port opening 102ad and its corresponding port openings of the neighbouring plates via the plate interspaces between the plates 102a and 102b, 102c and 102d, 102d and 102e, 102f and 102g and 102g and 102h. Consequently, the port openings 102aa and 102ab will communicate via three interplate flow channels, while the port openings 102ac and 102ad will communicate via six interplate flow channels, hence giving an asymmetry ratio of 1:2.

Optionally, the heat exchanger 100 according to the first embodiment may be provided with either a start plate 104 or an end plate 106, or both. In case it is desired to use a start- or end plate having its ports provided at the same level, sealing rings 110 may be placed between the start-or end plate and the areas surrounding the port openings being provided on a level giving a gap between the start- or end plate and the area surrounding the port opening.

In another embodiment of the invention, all port openings are provided with skirts adapted to contact one another and hence provide a seal between the port opening and the interplate flow channels. Communication can then be arranged by cutting openings in the skirts where communication between the port opening and the interplate flow channel is desired. This embodiment of the invention is advantageous in that identical plates may be used, the only difference between the plates being that openings are pierced, cut or drilled into the skirts

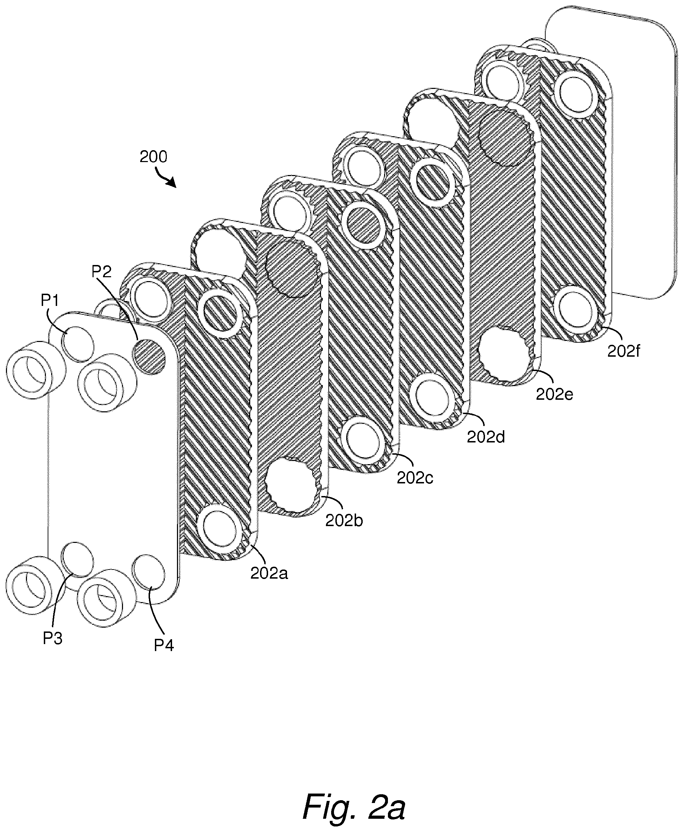

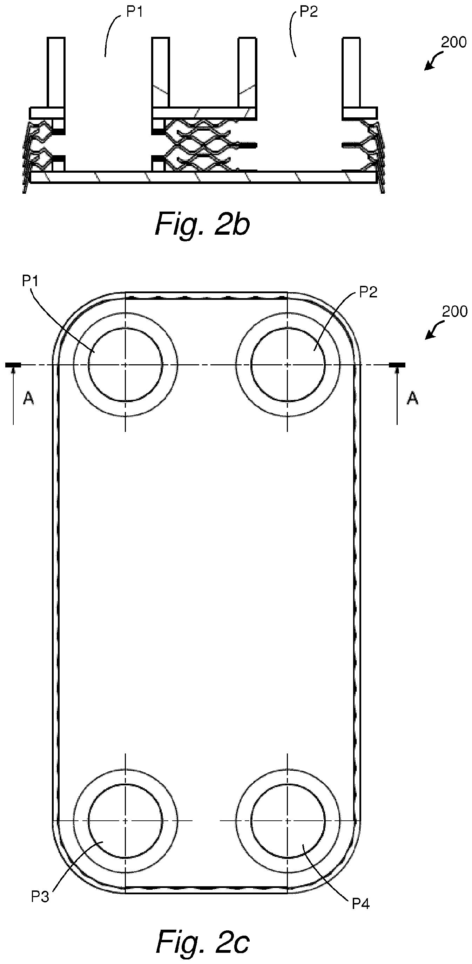

In Figs. 2a-2c, a second embodiment of the invention is shown. In Figs 2a-2c, a heat exchanger 200 comprises a number of heat exchanger plates 202a-202f, all of which being provided with port openings P1-P4. All the heat exchanger plates exhibit a pressed pattern of ridges and grooves adapted to keep the plates on a distance from one another under formation of interplate flow channels, just like in the first embodiment. Some of the port openings are surrounded by areas provided on a high level or a low level, while some of the heat exchanger plates (202b and 202e) are provided with port openings where the port openings are significantly larger than the port openings of the other heat exchanger plates. In the following, the interplate flow channels will be denoted a-b for the flow channel between the plates 202a and 202b, b-c between the plates 202 b and 202c, and so on. The port openings P1 and P3 of each plate are identical, which also is the case for port openings P2 and P4.

With reference to Fig. 2c, the port opening P1 of heat exchanger plate 202a is surrounded by an area provided on a low level, while the port opening P2 of the same plate is surrounded by an area provided on a high level; by "low" and "high" is meant that the area is located far from or close to the end plate 206, respectively. Moreover, a "low" level means that the level is lower then the level of the grooves, and a "high" level is higher than the level of the ridges, such that the areas surrounding the port openings may contact one another although a plate with a large port opening is placed between the heat exchanger plates provided with said high and low areas surrounding the port openings. In the shown, exemplary embodiment, the heat exchanger plate 202b is provided with large port openings, and the area surrounding the port openings of the plate 202c are located oppositely as compared to the areas surrounding the port openings, i.e. the port opening P1 of this plate is located on a high level, and the port opening P2 is located on a low level. The port openings of the plate 202e are located oppositely compared to the plate 202d.

This has the result that the area surrounding the port opening P1 of the plate 202a will contact the area surrounding the port opening P1 of the plate 202c, while the areas surrounding the port opening P1 of the plates 202c and 202d will not contact one another. Regarding the port opening P2, the areas surrounding this port opening of plates 202a and 202c will not contact one another, while the areas surrounding the port opening P2 of plates 202c and 202d will.

Hence, the port opening P1 will communicate with interplate channel c-d , while the port opening P2 will communicate with the interplate channels a-b, b-c, d-e and e-f.

It should be noted that the embodiment of Figs. 2a-2c is exemplary only; it has an asymmetry ratio of 1 to 5. However, if the stack would comprise more heat exchanger plates according to what is shown in Figs. 2a-2c, the asymmetry ratio would approach a value of two. Moreover, a skilled person would realise that it is possible to provide a "single" channel at the first and last plate interspaces, such as shown in the first embodiment.

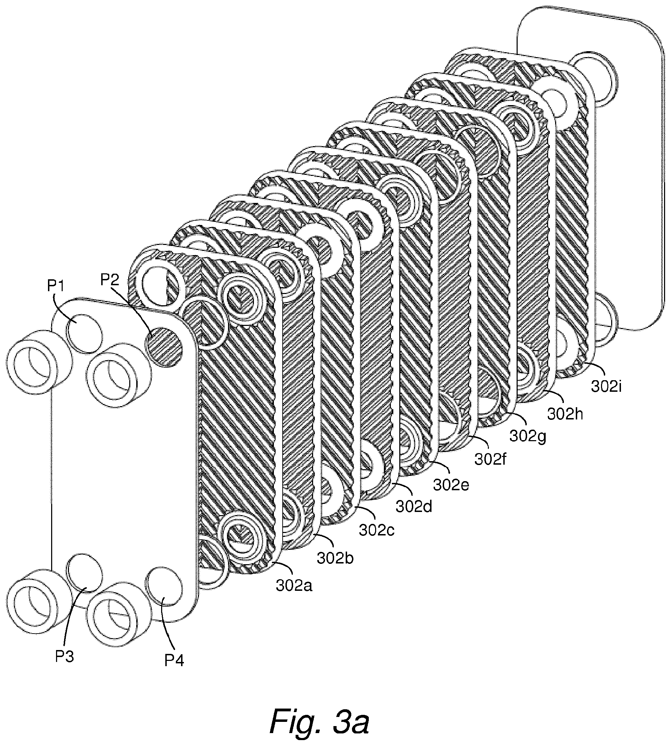

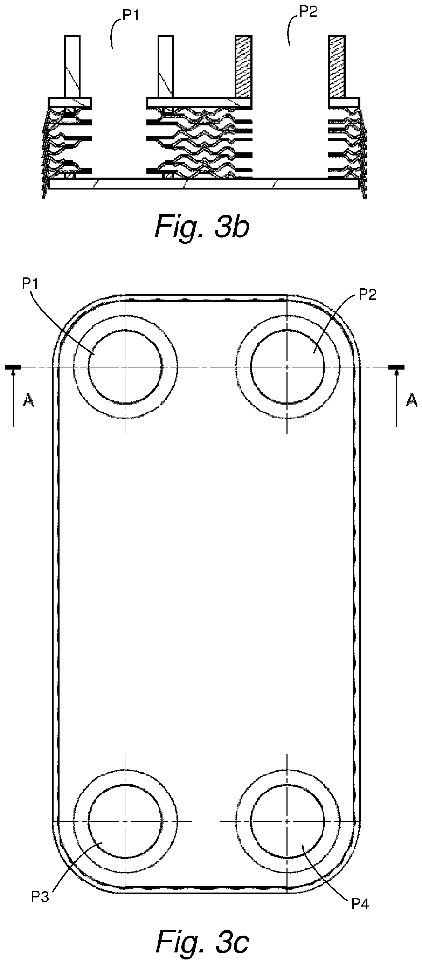

In Figs 3a-3c, still another embodiment of a heat exchanger according to the invention is shown. In Figs. 3a-3c, a heat exchanger 300, comprising nine heat exchanger plates 302a-302i is shown, all of which comprising port openings P1-P4 and a pressed pattern of ridges R and grooves G, just like the heat exchanger plates of the previously disclosed embodiments. Plate interspaces between the heat exchanger plates will be denoted a-b, b-c and so forth.

The port openings of the heat exchanger plates 302a-302i are surrounded by areas provided on various levels on different diameters in a way to be explained later.

In the embodiment shown in Figs. 3a-3c, the port opening P1 is closed from communication with the plate interspace a-b by contacting areas surrounding the port openings of plates 302a and 302b on a large diameter. The port opening P1 is also closed from communication with plate interspace b-c, by cooperation between areas surrounding the port opening on a small diameter. Moreover, port opening P1 will communicate with plate interspaces c-d and f-g, and it will be closed from communication to plate interspaces d-e, e-f, g-h and h-i by cooperation between areas surrounding the port opening on small, large, large and small diameters, respectively.

The port opening P2, on the other hand, will communicate with the plate interspaces a-b, b-c, d-e, e-f, g-h and h-i, whereas it will be closed from communication with plate interspaces c-d and f-g. The selective communication between the plate interspaces and port opening P2 is achieved by contacting or non-contacting surfaces surrounding the port opening P2, wherein all such surfaces are provided on the same diameter.

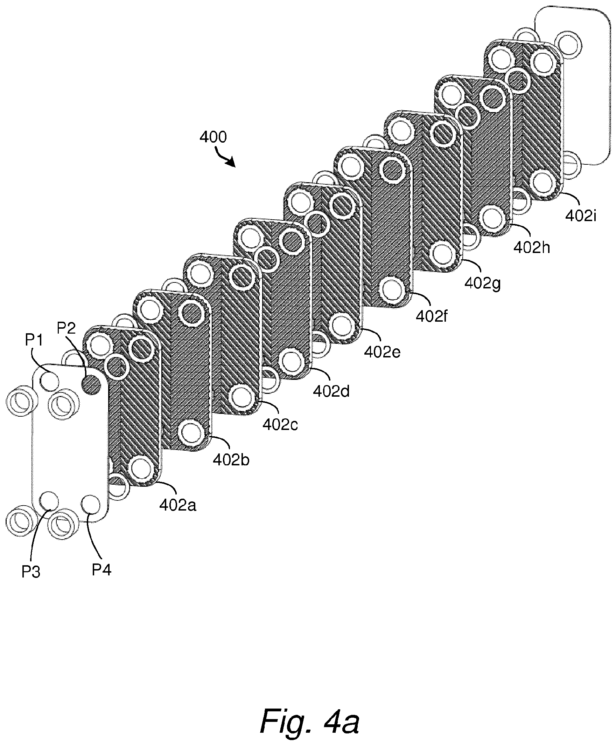

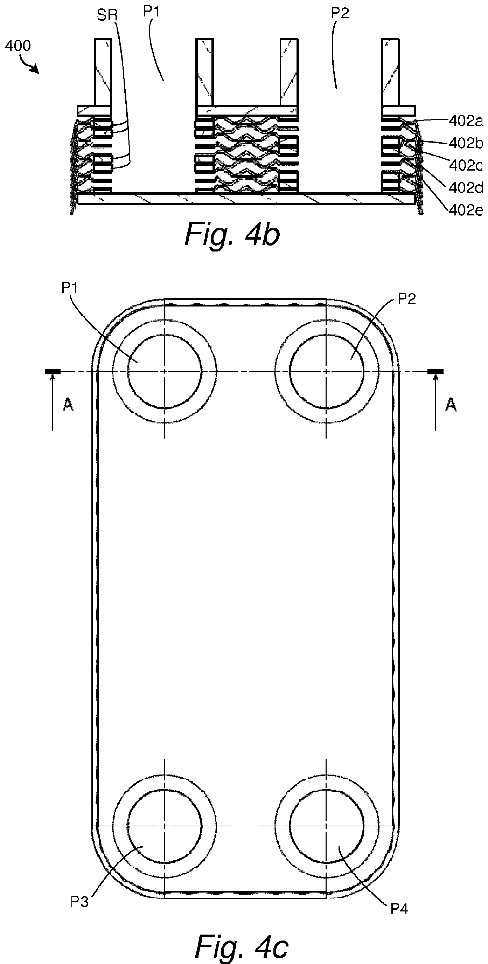

In Figs. 4a-4c, one further embodiment is shown. This embodiment is primarily useful in case a low flow resistance and a low ratio of heat exchange is desired, which e.g. might be interesting if the heat exchanger is used as a so-called suction gas heat exchanger, i.e. a heat exchanger used for exchanging heat between refrigerant about to enter a compressor and compressed refrigerant leaving the compressor. In theory, it does not matter if the heat exchange between the incoming and outgoing media is efficient, but in practice, the compressor might be overheated if the heat exchange is too effective.

In the figs. 4a-4c, a heat exchanger 400 according to one example which does not form not part of the claimed invention is shown. The heat exchanger 400 comprises a number of heat exchanger plates 402a-401i, each being identical to the heat exchanger plates being disclosed in conjunction with figs 1a-1c. Moreover, the heat exchanger 400 comprises a number of sealing rings SR, the provision of which will be disclosed below.

As mentioned above, the heat exchanger 400 is designed to give a bad heat exchange. This may be achieved in two ways: either by decreasing the heat exchange surface, or by decreasing the heat exchange over the surface. In the heat exchanger 400, the sealing rings SR are arranged such that there will be flow channels from the port opening P1 to e.g. the port opening P3 that neighbour one another. In fig. 4b, it is shown that there are sealing rings SR provided to block flow from the port opening P1 to the interplate flow channels between heat exchanger plates 402a, 402b and 402c, whereas the port opening P1 will communicate with the interplate flow channels between the heat exchanger plates 402c, 402d and 402e. The port opening P2 will communicate with the interplate flow channels between plates 402a, 402b and 402c and be closed from communication with the interplate flow channels between heat exchanger plates 402c, 402d and 402e.

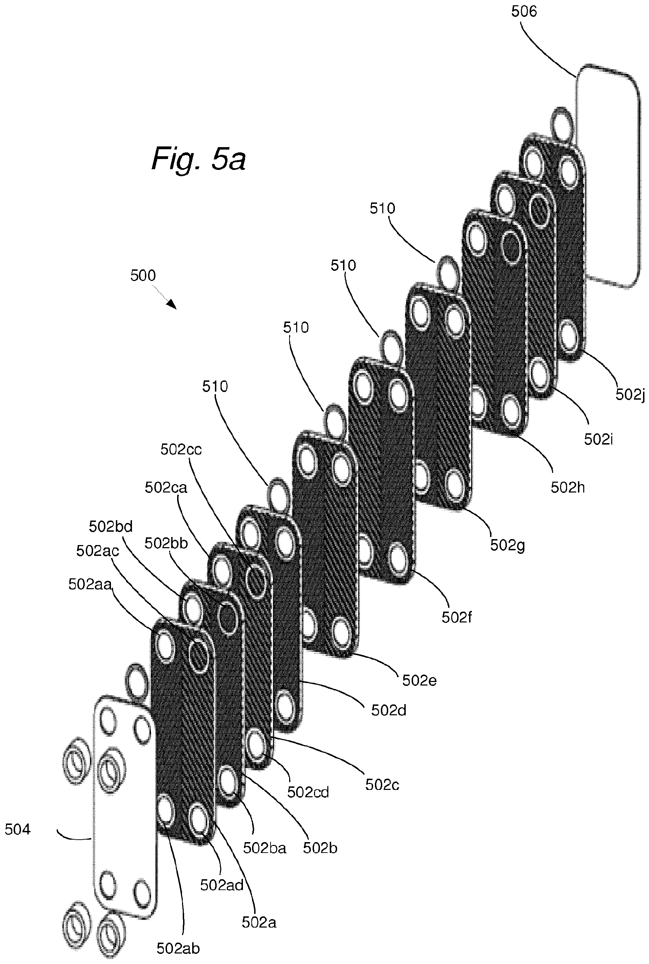

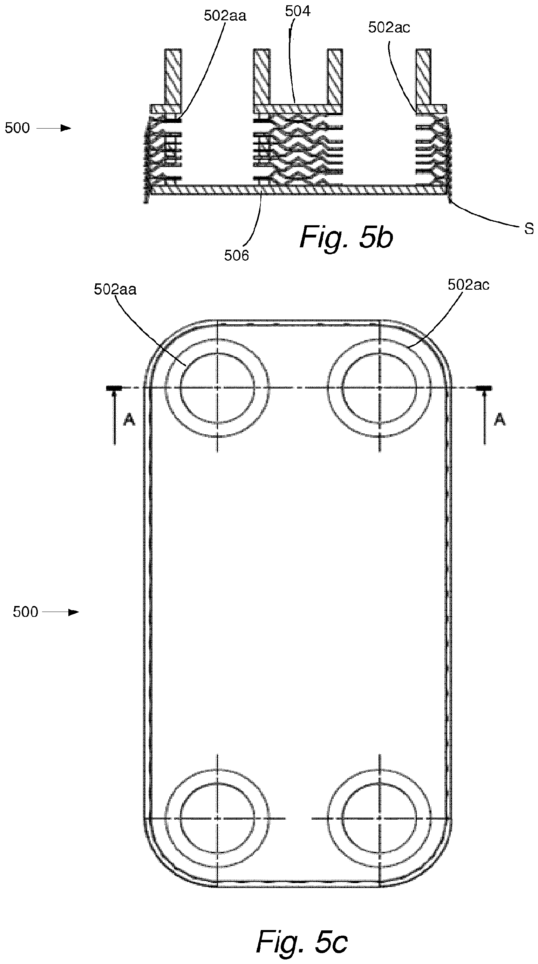

With reference to Figs. 5a, 5b and 5c, a heat exchanger 500 according to a fifth embodiment of the invention comprises a number of heat exchanger plates 502a-502j, each being provided with a pressed pattern of ridges R and grooves G and being placed in a stack to form the heat exchanger. A skirt S surrounds each plate, the skirt S being adapted to contact skirts of neighbouring plates and form a seal for a plate interspace formed by the plates, the formation of the plate interspace being elaborated on further below. The ridges R and grooves G are preferably arranged in a herringbone pattern, such that contact points between crossing ridges and grooves of neighbouring plates are formed when the plates are put in a stack wherein every other plate is turned 180 degrees in its plane with respect to its neighbouring plates.

Moreover, the heat exchanger plates are provided with port openings 502aa-502ad, 502ba-502bd...502ja-502jd, wherein the areas surrounding the port openings 502aa, 502ab. 502ba, 502bb, 502ca, 502cb, 502da, 502db, 502ec, 502ed, 502fa, 502fb, 502ga, 502 gb, 502ha, 502hb, 502ia, 502ib, 502ja and 502jb are provided on a low level and wherein the remaining port openings are provided on a high level. When the heat exchanger plates are stacked in a stack, every other plate is turned 180 degrees in the plane as compared to its neighbouring plates. As a result of this, there will be a selective communication between the ports and the interplate flow channels - however, due to the arrangement of high and low ports, some of the interplate flow channels will communicate with all four port openings. This would lead to mixing of the fluids to exchange heat, which of course is highly unsuitable. To avoid this, sealing rings 510 are placed between the areas surrounding the port openings 502dd and 502ea, 502ea and 502fd, 502fd and 502ga and 502ga and 502hd. Also, sealing rings 110 (however not shown) are placed between ports 502dc and 502eb, 502eb and 502fc, 502fc and 502gb and 502gb and 502hc.

This leads to a heat exchanger wherein the port opening 502aa and its corresponding port openings of the other plates will communicate with the port opening 502ab and its corresponding port openings of the other plates via the interplate flow channels between heat exchanger plates 502b and 502c and between 502h and. The port opening 502ac and its corresponding port opening of the other plates will communicate with the port opening 502ad and its corresponding port openings of the neighbouring plates via the plate interspaces between the plates502a and 502b, 502c and 502d, 502d and 502e, 502e and 502f, 502f and 502g, 502g and 502h, and between 502i and 502j. Consequently, the port openings 502aa and 502ab will communicate via two interplate flow channels, while the port openings 502ac and 502ad will communicate via seven interplate flow channels, hence giving an asymmetry ratio of 2:7. However, by providing further heat exchanger plates in the stack, arranged in the same manner as the heat exchanger plates 502a-502j, a ratio going towards the ratio 1:5 may be achieved by this arrangement.

Optionally, the heat exchanger 500 according to the fifth embodiment may be provided with either a start plate 504 or an end plate 506, or both. In case it is desired to use a start- or end plate having its ports provided at the same level, sealing rings 510 may be placed between the start-or end plate and the areas surrounding the port openings being provided on a level giving a gap between the start- or end plate and the area surrounding the port opening.

In still another embodiment, not shown in the drawings, the heat exchanger comprises a number of identical plates, wherein every other plate is turned 180 degrees in its plane compared to its neighbouring plates. The plates are providd with a herringbone pattern of ridges and grooves adapted to keep the plates on a distance from one another such that interplate flow channels are formed between neighbouring plates. Selective communication between the interplate flow channels and port openings is provided by arranging areas surrounding the port openings such that such areas surrounding port openings of neighbouring plates alternatingly will contact one another, hence sealing the port opening from communication with the interplate channel limited by the plates belonging to the port openings in question or not contact one another, hence allowing for a communication between the por opening and the interplate flow channel limited by the plates.

Until now, it has only been possible to manufacture symmetrical heat exchangers from identical heat exchanger plates, but according to this embodiment, it is possible to achieve asymmetry ratios of 3:1, 3:3, 5,:1, 5:3, or any uneven number divided by any other uneven number.

This is achieved by providing a sealing ring extending from an area surrounding a port opening of one plate to another area surrounding a port opening of another plate. By the provision of such a sealing ring, the communication that would have been present between the port opening and the interplate flow channel is blocked.

In order to provide for communication between the interplate flow channel that has been shut off from communication with the previous port opening to another port opening, it is possible to drill e.g. a hole to open the inteplate flow channel to communication with the other port. It is also possible to cut a larger port opening, such that the areas surrounding the port opening and would have come into contact with one another do not contact one another any more, hence providing for communication between the other port opening and the interplate flow channel having been blocked from communication with the previous port opening by the sealing ring.

Moreover, the heat exchanger plates may be brazed to one another in order to form the heat exchanger - the brazing material may be any brazing material known to persons skilled in the art, e.g. copper, nickel or iron based brazing materials comprising a melting point depressant.

## Claims

1. A plate heat exchanger (100; 200; 300; 400; 500) comprising a stack of heat exchanger plates (102a-102j; 202a-202f; 302a-302i; 402a-402i; 502a-502j) provided with a pressed pattern of ridges (R) and grooves (G) adapted to keep the plates (102a-102j; 202a-202f; 302a-302i; 402a-402i; 502a-502j) in the stack at a distance from one another by providing contact points between ridges (R) of one heat exchanger plate and grooves (G) of a neighbouring plate and vice versa, such that interplate flow channels are formed between all neighbouring heat exchanger plates (102a-102j; 202a-202f; 302a-302i; 402a-402i (502a-502j) in the stack, wherein four port openings (102aa, 102ab, 102ac, 102ad; P1-P4; 402aa-402ad; 502aa-502ad) are arranged to provide for selective communication to the interplate flow channels, the port openings (102aa, 102ab, 102ac, 102ad; P1-P4; 402aa-402ad; 502aa-502ad) being arranged in pairs communicating with the same interplate flow channels, wherein one of the port opening pairs communicates with at least two more interplate flow channels than the other pair, **characterised in that** the selective communication between the port openings (102aa, 102ab, 102ac, 102ad; P1-P4; 402aa-402ad; 502aa-502ad) at least partly is achieved by providing areas surrounding the port openings of each heat exchanger plate on different levels, such that the areas of neighbouring plates either contact one another or do not contact one another.

2. The plate heat exchanger (100; 200; 300; 400; 500) according to claim 1, wherein the heat exchanger plates (102-102j; 202a-202f; 302a-302i; 402a-402i; 502a-502j) are brazed to one another to form the heat exchanger (100; 200; 300; 400; 500).

3. The plate heat exchanger (100; 200; 300; 400; 500) according to claim 1 or 2, wherein the heat exchanger plates (102a-102j; 202a-202f; 302a-302i; 402a-402i; 502a-502j) each are provided with a skirt (S) extending in the periphery of the heat exchanger plate (102a-102j; 202a-202f; 302a-302i; 402a-402i; 502a-502j), wherein skirts (S) of neighbouring plates are contacting one another when the heat exchanger plates (102a-102j; 202a-202f; 302a-302i; 402a-402i; 502a-502j) are placed in the stack to form the heat exchanger.

4. The plate heat exchanger (200; 300; 400, 500) according to any of the preceding claims 1-3, wherein selective communication between some of the port openings (102aa, 102ab, 102ac, 102ad; P1-P4; 402aa-402ad; 502aa-502ad) and the interplate flow channels is achieved by providing sealing rings (110; SR; 510) between the areas surrounding the port openings on neighbouring plates.

5. The plate heat exchanger (200; 300; 400; 500) according to any of the preceding claims, wherein at least some of the port openings (P1-P4) of at least some heat exchanger plates (202a-202f; 302a-302i) are large enough to allow contact between areas surrounding the port openings of heat exchanger plates being provided on either sides of the heat exchanger plate provided with the large enough port opening.

## Patentansprüche

1. Plattenwärmetauscher (100; 200; 300; 400; 500), umfassend einen Stapel von Wärmetauscherplatten (102a-102j; 202a-202f; 302a-302i; 402a-402i; 502a-502j), welche mit einem gepressten Muster von Rippen (R) und Nuten (G) versehen sind, die dafür geeignet sind, um die Platten (102a-102j; 202a-202f; 302a-302i; 402a-402i; 502a-502j) in dem Stapel in einem Abstand voneinander zu halten, indem Kontaktpunkte zwischen den Rippen (R) einer Wärmetauscherplatte und den Nuten (G) einer benachbarten Platte und umgekehrt vorgesehen werden, so dass Strömungskanäle zwischen den Platten zwischen allen benachbarten Wärmetauscherplatten (102a-102j; 202a-202f; 302a-302i; 402a-402i; 502a-502j) in dem Stapel gebildet werden, wobei vier Portöffnungen (102aa, 102ab, 102ac, 102ad; P1-P4; 402aa-402ad; 502aa-502ad) angeordnet sind, um eine selektive Kommunikation mit den Strömungskanälen zwischen den Platten bereitzustellen, wobei die Portöffnungen (102aa, 102ab, 102ac, 102ad; P1-P4; 402aa-402ad; 502aa-502ad) in Paaren angeordnet sind, die mit denselben Strömungskanälen zwischen den Platten kommunizieren, wobei eines der Portöffnungspaare mit mindestens zwei Strömungskanälen zwischen den Platten mehr als das andere Paar kommuniziert, **dadurch gekennzeichnet, dass** die selektive Kommunikation zwischen den Portöffnungen (102aa, 102ab, 102ac, 102ad; P1-P4; 402aa-402ad; 502aa-502ad) mindestens teilweise erzielt wird, indem Bereiche bereitgestellt werden, welche die Portöffnungen jeder Wärmetauscherplatte auf verschiedenen Ebenen umgeben, so dass die Bereiche benachbarter Platten entweder einander kontaktieren oder einander nicht kontaktieren.

2. Plattenwärmetauscher (100; 200; 300; 400; 500) nach Anspruch 1, wobei die Wärmetauscherplatten (102a-102j; 202a-202f; 302a-302i; 402a-402i; 502a-502j) aneinander gelötet sind, um den Wärmetauscher (100; 200; 300; 400; 500) zu bilden.

3. Plattenwärmetauscher (100; 200; 300; 400; 500) nach Anspruch 1 oder 2, wobei die Wärmetauscherplatten (102a-102j; 202a-202f; 302a-302i; 402a-402i; 502a-502j) jeweils mit einer Schürze (S) versehen sind, die sich in der Peripherie der Wärmetauscherplatte (102a-102j; 202a-202f; 302a-302i; 402a-402i; 502a-502j) erstreckt, wobei die Schürzen (S) benachbarter Platten einander kontaktieren, wenn die Wärmetauscherplatten (102a-102j; 202a-202f; 302a-302i; 402a-402i; 502a-502j) in den Stapel platziert werden, um den Wärmetauscher zu bilden.

4. Plattenwärmetauscher (200; 300; 400; 500) nach einem der vorhergehenden Ansprüche 1 bis 3, wobei die selektive Kommunikation zwischen einigen der Portöffnungen (102aa, 102ab, 102ac, 102ad; P1-P4; 402aa-402ad; 502aa-502ad) und den Strömungskanälen zwischen den Platten erzielt wird, indem Dichtungsringe (110; SR; 510) zwischen den Bereichen bereitgestellt werden, welche die Portöffnungen an benachbarten Platten umgeben.

5. Plattenwärmetauscher (200; 300; 400; 500) nach einem der vorhergehenden Ansprüche, wobei mindestens einige der Portöffnungen (P1-P4) mindestens einiger Wärmetauscherplatten (202a-202f; 302a-302i) ausreichend groß sind, um einen Kontakt zwischen Bereichen zu gestatten, welche die Portöffnungen der Wärmetauscherplatten umgeben, die auf beiden Seiten der Wärmetauscherplatte bereitgestellt sind, welche mit der ausreichend großen Portöffnung versehen ist.

## Revendications

1. Un échangeur de chaleur à plaques (100 ; 200 ; 300 ; 400 ; 500) comprenant une pile de plaques d'échangeur de chaleur (102a-102j ; 202a-202f ; 302a-302i ; 402a-402i ; 502a-502j) pourvues d'un motif pressé de nervures (R) et de rainures (G) adapté pour maintenir les plaques (102a-102j ; 202a-202f ; 302a-302i ; 402a-402i ; 502a-502j) dans la pile à une certaine distance les unes des autres en fournissant des points de contact entre les nervures (R) d'une plaque d'échangeur de chaleur et les rainures (G) d'une plaque voisine et vice versa, de sorte que des canaux d'écoulement interplaques sont formés entre toutes les plaques d'échangeur de chaleur voisines (102a-102j ; 202a-202f ; 302a-302i ; 402a-402i ; 502a-502j) dans la pile, dans laquelle quatre ouvertures d'orifice (102aa, 102ab, 102ac, 102ad ; P1-P4 ; 402aa-402ad ; 502aa-502ad) sont disposées pour assurer une communication sélective avec les canaux d'écoulement interplaques, les ouvertures d'orifices (102aa, 102ab, 102ac, 102ad ; P1-P4 ; 402aa-402ad ; 502aa-502ad) étant disposées par paires communiquant avec les mêmes canaux d'écoulement interplaques, dans lequel l'une des paires d'ouvertures d'orifices communique avec au moins deux canaux d'écoulement interplaques de plus que l'autre paire, **caractérisé en ce que** la communication sélective entre les ouvertures d'orifices (102aa, 102ab, 102ac, 102ad ; P1-P4 ; 402aa-402ad ; 502aa-502ad) est au moins partiellement obtenue en fournissant des zones entourant les ouvertures d'orifices de chaque plaque d'échangeur de chaleur sur différents niveaux, de sorte que les zones des plaques voisines soient en contact les unes avec les autres ou ne soient pas en contact les unes avec les autres.

2. L'échangeur de chaleur à plaques (100 ; 200 ; 300 ; 400 ; 500) selon la revendication 1, dans lequel les plaques d'échangeur de chaleur (102-102j ; 202a-202f ; 302a-302i ; 402a-402i ; 502a-502j) sont brasées les unes aux autres pour former l'échangeur de chaleur (100 ; 200 ; 300 ; 400 ; 500).

3. L'échangeur de chaleur à plaques (100 ; 200 ; 300 ; 400 ; 500) selon la revendication 1 ou 2, dans lequel les plaques d'échangeur de chaleur (102a-102j ; 202a-202f ; 302a-302i ; 402a-402i ; 502a-502j) sont chacune munies d'une jupe (S) s'étendant dans la périphérie de la plaque d'échangeur de chaleur (102a-102j ; 202a-202f ; 302a-302i ; 402a-402i ; 502a-502j), dans lequel les jupes (S) des plaques voisines sont en contact les unes avec les autres lorsque les plaques d'échangeur de chaleur (102a-102j ; 202a-202f ; 302a-302i ; 402a-402i ; 502a-502j) sont placées dans la pile pour former l'échangeur de chaleur.

4. L'échangeur de chaleur à plaques (200 ; 300 ; 400, 500) selon l'une quelconque des revendications précédentes 1-3, dans lequel une communication sélective entre certaines des ouvertures d'orifices (102aa, 102ab, 102ac, 102ad ; P1-P4 ; 402aa-402ad ; 502aa-502ad) et les canaux d'écoulement interplaques est obtenue en fournissant des bagues d'étanchéité (110 ; SR ; 510) entre les zones entourant les ouvertures d'orifices sur des plaques voisines.

5. L'échangeur de chaleur à plaques (200 ; 300 ; 400 ; 500) selon l'une quelconque des revendications précédentes, dans lequel au moins certaines des ouvertures d'orifices (P1-P4) d'au moins certaines plaques d'échangeur de chaleur (202a-202f ; 302a-302i) sont suffisamment grandes pour permettre un contact entre les zones entourant les ouvertures d'orifices des plaques d'échangeur de chaleur qui sont prévues de chaque côté de la plaque d'échangeur de chaleur pourvue de l'ouverture d'orifice suffisamment grande.
